# EUROPEAN PATENT SPECIFICATION

(11) **EP 0 954 116 B1**
(45) Date of publication and mention of the grant of the patent: **08.10.2003**
(21) Application number: 98107869.4
(22) Date of filing: 29.04.1998
(51) Int. Cl.: H04B 7/005

(54) **Method of controlling transmission output of radio**
Verfahren zum Steuern der Sendeausgangsleistung von Funksystemen
Procédé de commande de la puissance d'émission d'un émetteur radio

(43) Date of publication of application: 03.11.1999
(73) Proprietor: KYOCERA CORPORATION, Yamashina-ku, Kyoto-shi, Kyoto (JP)
(72) Inventor: Taniguchi, Toshio, c/o Kyocera Corporation, Tsuzuki-ku, Yokohama-shi, Kanagawa (JP)
(74) Representative: Sajda, Wolf E., Dipl.-Phys.

(56) References cited:
- US-A- 5 128 629
- US-A- 5 507 018

## Description

### BACKGROUND OF THE INVENTION

The present invention relates to the control of a transmission output of a radio.

For a radio which must stably hold transmission output power, it is very important to maintain the gain of a transmitting circuit at all times in a stable manner.

To obtain such a radio, various types of transmission output control have already been carried out. The transmission output control can be broadly classified into an open loop type, in which the gain of a transmitting circuit is stabilized by means of an output from a temperature sensor or a temperature-detecting element, such as a thermistor; and a closed loop type, in which the gain of the transmitting circuit is stabilized through use of an output from a detection circuit provided in the final stage of the transmitting circuit.

The transmission output control of the former type has the advantage of being comparatively simple and less expensive, as well as being able to intentionally and readily change the transmission output. On the other hand, the individual differences in temperature characteristics of the components constituting the temperature-detecting element and the transmitting circuit make it impossible to ensure sufficient accuracy of gain. The transmission output control of the latter type requires a detection circuit which is provided in the final stage of the transmitting circuit and is the only element that may adversely affect the accuracy of gain. For this reason, the transmission output control of the closed loop type provides a better accuracy of gain compared to the transmission output control of the open loop type. On the other hand, the extent of variation in the transmission output power is determined by the extent of detection of the detection circuit. Therefore, the transmitting circuit, which intentionally changes the transmission output power, will result in a complicated configuration and will be expensive.

In the case of the foregoing existing technique being applied to a radio which transmits a signal through a control channel or a call channel by use of one transmitting circuit, and which intentionally changes the transmission output of the call channel while constantly maintaining the transmission output of the control channel, e.g., a base station for use with a simplified portable telephone which employs a time-division multiplexing method, a sufficient accuracy of transmission output cannot be achieved by the open loop method. The closed loop method suffers the problem of limiting the extent of change in the transmission output or involves the monitoring of a detection value output from the detection circuit for each transmission.

The document US - A- 5 507 018 discloses a transmitter power control system, in which the closed loop is always maintained; the power level of the traffic channel is kept equal to the one of the transmitted control channel by mean of a device that recognizes when a control channel is transmitted and then maintains the reference voltage, used by the closed loop feed-back control, to the same level during the following traffic channel time slots within the frame which includes the control channel.

The document US - A- 5 128 629 discloses another feed back power control system for an on/off switched transmitter; to avoid overshoots, the loop is open during the non-transmission periods and a track and hold circuit is inserted which maintains the reference level of the previous transmission time period.

### SUMMARY OF THE INVENTION

To solve the foregoing problems, the present invention provides a radio which transmits a signal through a control

channel or a call channel by use of one transmitting circuit and which intentionally changes the transmission output of the call channel, the improvement being characterized by comprising: a closed loop which is formed, at the time of transmission of a signal through the control channel, in order to feed back a detection output value of the transmission output of the control channel to a transmission output control section to thereby control the transmission output of the control channel, and which is canceled at the time of transmission of a signal through the call channel, thereby controlling the transmission output of the call channel.

### BRIEF DESCRIPTION OF THE DRAWINGS

Fig. 1 is a flowchart showing a method of controlling the transmission output of a radio according to the present invention; and
Fig. 2 is a block diagram showing a transmission block of a radio according to one embodiment of the present invention, in which a closed loop is formed at the time of transmission of a signal through a control channel.

### DETAILED DESCRIPTION OF THE PREFERRED EMBODIMENT

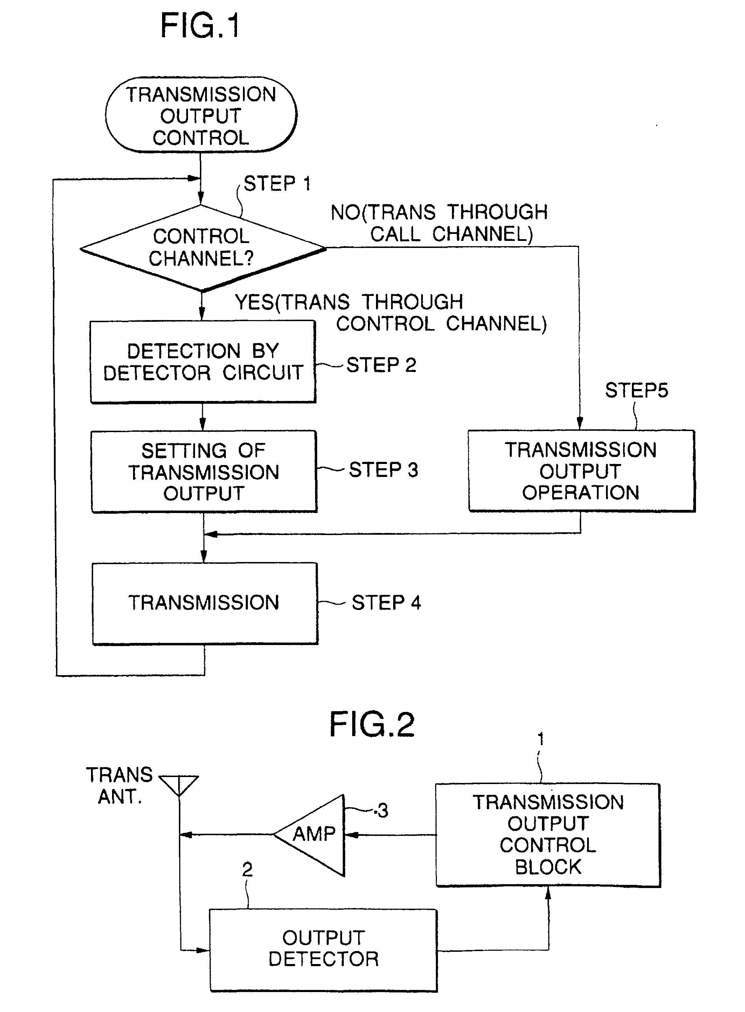

Fig. 1 shows a flowchart showing a method of controlling the transmission output of a radio according to the present invention, and Fig. 2 is a block diagram showing a transmission block diagram with a closed loop. Since a control channel and a call channel are available for signal transmission, the way to control a transmission output will change depending on which one of the two channels is used for transmission. More specifically, in step 1, the transmission output control block 1, shown in Fig. 2, makes a determination as to whether or not a signal is transmitted through the control channel. In the case of signal transmission performed through the control channel, the processing proceeds to step 2, where an output from an output detector 2 is detected. Subsequently, in step 3, a transmission output is set so as to constantly control the transmission output on the basis of the value of the thus-detected output. In step 4, transmission is performed on the basis of the foregoing setting.In the case where a signal is transmitted through the call channel in step 1, the closed loop operations executed in steps 2 and 3 are not performed (i.e., the loop is canceled). The processing then proceeds to step 5, where a transmission output operation is performed, and the transmission of a signal is performed in step 4. The value detected in step 2 has been stored in memory of the transmission output control block 1. In the case of signal transmission performed through the call channel, a transmission output is set on the basis of the detection output value stored in the memory in step 5 (i.e., a step of a transmission output operation). Accordingly, at the time of transmission of a signal through the call channel, a transmission output is controlled through use of only the transmission signal output from a variable attenuator or a modulator provided in the transmission output control block 1.

As mentioned previously, the signal transmission performed through the control channel corresponds to a predetermined transmission output. Consequently, the detection output value obtained by the output detector 2 shown in Fig. 2 is monitored by the transmission output control block 1, and the signal is transmitted according to the transmission output settings. As a result, the gain of the transmission output is stabilized, and the accuracy of the same is maintained. The detection output value delivered from the output detector 2 shown in Fig. 2 is monitored solely at the time of transmission of a signal through the control channel.

The signal transmission performed through the call channel corresponds to a variable transmission output. The value, which has been output from the output detector 2 shown in Fig. 2 and monitored at the time of transmission of a signal through the control channel, is stored in the transmission output control block 1. Accordingly, signal transmission is performed by processing a transmission output through calculation of intended transmission output power and an output value of the power, thereby resulting in a gain being stabilized and the accuracy of the transmission output being maintained.

As has been described above, in the case of the control channel, in which signal transmission is performed through use of a constant transmission output, a closed loop control operation is carried out. In contrast, in the case of the call channel, in which signal transmission is performed through use of a variable transmission output, a transmission control operation is performed through use of only the signal output from an attenuator or a modulator provided in a transmitting circuit, enabling holding of a constantly stable transmission output.

The present invention has the following advantages:
- The number of monitors for correction value regarding the accuracy of a transmission output can be reduced;
- the transmission output detection circuit can be simplified;
- the accuracy of a transmission output can be stabilized;
- the interference resulting from the control of a transmission output can be prevented; and
- the frequency band of the transmission can be effectively utilized by virtue of the control of a transmission output.

## Claims

1. A method of controlling the transmission output of a radio which employs a time-division multiplexing method and transmits a signal through a control channel or a call channel by use of one transmitting circuit, and which intentionally changes the transmission output power of the call channel, **characterized by** comprising:
a closed loop (2, 1, 3) which is formed, at the time of transmission of a signal through the control channel, in order to feed back a detection output value provided by a detection circuit (2) in the final stage of the transmitting circuit to a transmission output control section (1) to thereby control the transmission output of the control channel, and wherein the closed loop (2, 1, 3) is cancelled at the time of transmission of a signal through the call channel, wherein the transmission output power is controlled through the use of only the transmission signal output from a variable attenuator or a modulator provided in the transmission output control block (1).

2. The method according to claim 1,
wherein the transmission output control section (1) holds a detection output value of the transmission output which is obtained by the closed loop (2, 1, 3) formed at the time of transmission of a signal through the control channel, and controls the transmission output on the basis of the thus-held detection output value (2) at the time of transmission of a signal through the call channel.

## Patentansprüche

1. Verfahren zum Steuern des Sendeausgangssignals einer Funkeinrichtung, welche eine Zeitmultiplexverfahren verwendet und ein Signal durch einen Steuerkanal oder durch einen Rufkanal unter Verwendung von einer Sendeschaltung überträgt und welche gezielt die Sendeausgangsleistung des Rufkanals verändert,
**gekennzeichnet durch**,
einen geschlossenen Kreis (2, 1, 3), der zum Zeitpunkt der Übertragung eines Signals **durch** den Steuerkanal gebildet wird, um eine Rückkopplung von einem Detektions-Ausgangswert, der von einem Detektionskreis (2) in der Endstufe der Sendeschaltung zur Verfügung gestellt wird, zu einer Sendeausgangs-Steuereinheit (1) vorzunehmen, um **dadurch** den Sendeausgang des Steuerkanals zu steuern, und wobei der geschlossene Kreis während der Übertragung eines Signals **durch** den Rufkanal aufgehoben wird, wobei die Sendeausgangsleistung nur **durch** die Verwendung des Sendesignals gesteuert wird, das von einem variablen Dämpfungsglied oder einem Modulator abgegeben wird, der in dem Sendeausgangs-Steuerblock (1) vorgesehen ist.

2. Verfahren nach Anspruch 1,
wobei die Sendeausgangs-Steuereinheit (1) einen Detektions-Ausgangswert des Sendeausgangs hält, welcher von dem geschlossenen Kreis (2, 1, 3) erhalten wird, der zum Zeitpunkt der Übertragung eines Signals durch den Steuerkanal gebildet wird, und den Sendeausgang auf der Basis des derart festgehaltenen Detektions-Ausgangswertes (2) zum Zeitpunkt der Übertragung eines Signals durch den Rufkanal steuert.

## Revendications

1. Procédé pour commander la puissance de sortie d'émission d'un appareil radio qui utilise un procédé à multiplexage par répartition dans le temps et émet un signal au moyen d'un canal de commande ou d'un canal d'appel moyennant l'utilisation d'un circuit d'émission, et qui modifie intentionnellement la puissance de sortie d'émission du canal d'appel, **caractérisé en ce qu'**il comprend:
une boucle fermée (2, 1, 3) qui est formée, au moment de l'émission d'un signal par le canal de commande, de manière à envoyer une valeur de sortie de détection délivrée par un circuit de détection (2) dans l'étage final du circuit d'émission à une section (1) de commande de la puissance de sortie d'émission pour commander de ce fait la puissance de sortie d'émission du canal de commande, et selon lequel la boucle fermée (2, 1, 3) est supprimée au moment de l'émission du signal par le canal d'appel, la puissance de sortie d'émission étant commandée moyennant l'utilisation uniquement du signal d'émission délivré par un atténuateur variable ou par un modulateur prévu dans le bloc (1) de commande de la puissance de sortie d'émission.

2. Procédé selon la revendication 1,
selon lequel la section (1) de commande de la puissance de sortie d'émission maintient une valeur de sortie de détection de la puissance de sortie d'émission, qui est fournie par la boucle fermée (2, 1, 3) formée au moment de l'émission d'un signal par le canal de commande, et commande la puissance de sortie d'émission sur la base de la valeur de sortie de détection ainsi maintenue (2), au moment de l'émission d'un signal par le canal d'appel.
